Europäisches Patentamt

European Patent Office

Office européen des brevets

(11) Numéro de publication: **0 323 286**
**A1**

## DEMANDE DE BREVET EUROPEEN

(21) Numéro de dépôt: 88402983.6

(22) Date de dépôt: 28.11.88

(51) Int. Cl.⁴: **F 16 G 5/20**

(30) Priorité: 08.12.87 FR 8717039

(43) Date de publication de la demande:
05.07.89 Bulletin 89/27

(84) Etats contractants désignés:
BE DE ES GB IT LU NL SE

(71) Demandeur: **HUTCHINSON**
**2 rue Balzac**
**F-75008 Paris (FR)**

(72) Inventeur: **Simon, Jean-Michel**
**86, rue de Châtillon**
**F-92140 Clamart (FR)**

**Zarifé, Victor**
**La Loge-Château de Varenne**
**F-45220 Saint-Germain des Prés (FR)**

(74) Mandataire: **Orès, Bernard et al**
**Cabinet ORES 6, Avenue de Messine**
**F-75008 Paris (FR)**

(54) **Perfectionnements aux courroies de transmission de puissance.**

(57) Courroie trapézoïdale crantée de transmission de puissance comprenant un corps formé d'une matrice en élastomère dans laquelle est noyée une couche de câbles métalliques ou de fils câblés en matière textile, naturelle ou synthétique, servant de support de traction et des renforts dirigés sensiblement transversalement par rapport à la courroie, ayant en section droite une forme "ouverte" quelque peu analogue à une gouttière.

Les dits renforts (21) sont des renforts individuels indépendants les uns des autres et logés dans les creux (20) du crantage de la courroie.

FIG. 1

EP 0 323 286 A1

Bundesdruckerei Berlin

**Description**

## PERFECTIONNEMENTS AUX COURROIES DE TRANSMISSION DE PUISSANCE.

L'invention a pour objet des perfectionnements aux courroies de transmission de puissance.

Elle vise, en particulier, des perfectionnements aux courroies trapézoïdales crantées à flancs nus propres à être utilisées en tant qu'organes de transmission de puissance entre deux organes tournants dont l'un est solidaire d'un arbre mené et l'autre d'un arbre menant.

Lorsque de telles courroies sont utilisées pour la transmission d'une puissance élevée on a déjà proposé d'accroître leur rigidité transversale par l'introduction de renforts placés dans les crans et dirigés suivant la direction transversale de la courroie. Il en est ainsi, par exemple, dans SU-A-1 033 794, EP-A-0 084 702 ou encore dans EP-A-0 022 637 au nom de la Demanderesse. Dans SU-A-1 033 794 est décrite une courroie crantée dans laquelle on propose, pour réduire la vibration et le bruit, de noyer dans la matrice élastique qui la constitue une bande métallique conformée par matriçage pour présenter des paires de pattes disposées en correspondance des crans de la courroie. Les pattes sont retenues en place et maintenues par des inserts transversaux creux logés dans les crans, entre les pattes adjacentes, de sorte que la souplesse longitudinale est considérablement réduite, avec pour conséquence un endommagement rapide en fonctionnement par rupture de la cohésion à l'interface des inserts et de la matrice élastique, nonobstant les moyens adhésifs prévus pour assurer cette cohésion.

Si des courroies selon EP-A-0 022 637, dans lesquelles les renforts logés dans les crans et dirigés sensiblement transversalement par rapport à la courroie ont, en section droite, une forme "ouverte" quelque peu analogue à une gouttière, donnent satisfaction, il est cependant apparu nécessaire d'améliorer encore leurs caractéristiques , notamment en ce qui concerne leur flexibilité, en particulier à l'enroulement sur des poulies de faible diamètre avec lesquelles elles peuvent coopérer.

C'est, par conséquent, un but général de l'invention de fournir une courroie trapézoïdale crantée de transmission de puissance perfectionnée ayant une excellente déformation d'enroulement, y compris pour des poulies de faible diamètre avec lesquelles elle coopère, d'une part, qui présente une excellente stabilité de ses crans dans le plan radial, d'autre part, et qui permette la transmission d'une puissance élevée, c'est-à-dire montre la rigidité transversale requise sans, toutefois, qu'il soit porté atteinte à sa souplesse longitudinale.

C'est, aussi, un but de l'invention de fournir une telle courroie dont la durée de vie soit aussi grande, sinon plus grande que celle des courroies antérieurement connues, et qui ne présente pas, en outre, les inconvénients de certains d'entre elles dans lesquelles la rigidité transversale est obtenue à l'aide d'inserts prévus dans les crans de la courroie.

Le problème est résolu, selon l'invention, dans une courroie trapézoïdale crantée de transmission de puissance comprenant un corps formé d'une matrice en élastomère dans laquelle est noyée une couche de câbles métalliques ou de fils câblés en matière textile, naturelle ou synthétique, servant de support de traction et ayant des renforts à section droite "ouverte", de forme quelque peu analogue à une gouttière, par le fait que lesdits renforts, indépendants les uns des autres, sont placés dans les creux de crantage de la courroie.

Il en résulte, d'une part, une bonne stabilité des crans dans le plan transversal et, d'autre part, une meilleure qualité de fonctionnement, vraisemblablement dûe, sans que la Demanderesse soit liée par cette explication, au fait que l'on rapproche le centre de gravité disposé dans le plan radial de la courroie de la fibre neutre en traction proche de l'armature de câbles ou de câblés qu'elle comprend.

Dans une première forme de réalisation, les renforts qui peuvent être du type métallique, à base de résine synthétique, armée ou non armée, ou encore sous forme de différents lamifiés sont placés chacun dans les creux du crantage de la courroie suivant un seul pli dont les flancs sont dirigés sensiblement parallèlement au crantage.

Dans une autre forme de réalisation, l'invention prévoit d'associer à chaque creux du crantage de la courroie, non plus un, mais plusieurs plis ayant sensiblement la même longueur, disposés sensiblement parallèlement les uns aux autres et dont les flancs suivent sur une plus ou moins grande longueur le contour du crantage, donnant ainsi en section droite à la courroie, quelque peu l'aspect d'un anticlinal. Une telle disposition augmente encore la raideur transversale de la courroie, sans toutefois porter atteinte à sa souplesse longitudinale.

Dans une variante de réalisation, les renforts sont également disposés dans chacun des creux de crantage, suivant des plis superposés, mais sont, toutefois, de longueurs différentes.

Dans encore une autre forme de réalisation, on prévoit en outre de loger dans chaque cran de la courroie, -et plus précisément au voisinage et entre les extrémités des renforts qui garnissent deux creux adjacents-, un insert également dirigé transversalement par rapport à la courroie et qui, en diminuant l'épaisseur d'élastomère dans le cran qui le reçoit, contribue encore à accroître la stabilité desdits crans dans le plan radial.

Les renforts dont on a indiqué ci-dessus qu'ils peuvent être du type métallique, par exemple en acier inoxydable, en aluminium, en alliages d'aluminium, en alliages cuivreux, etc... peuvent également être constitués par des produits façonnés à base de résine synthétique ou de résine et de fibres naturelles et/ou sythétiques ou, encore être constitués par des matériaux composites à pluralité de feuilles solidarisées entre elles en tant que lamifiés à tissus à fibres naturelles et/ou synthétiques, élastomère et feuillard métallique, etc... .

Lesdits renforts peuvent être à bords libres simples, ou, en variante, à bords roulés, ou partiellement rabattus, recourbés vers l'intérieur ou l'extérieur de la forme "ouverte" suivant laquelle ils sont conformés.

L'invention sera bien comprise par la description qui suit, faite à titre d'exemple et en référence au dessin annexé dans lequel :

la figure 1 est une vue schématique, en perspective, d'une partie de courroie perfectionnée selon l'invention ;

les figures 2 à 6 sont des vues schématiques partielles, en élévation, de différentes réalisations de courroies crantées selon l'invention.

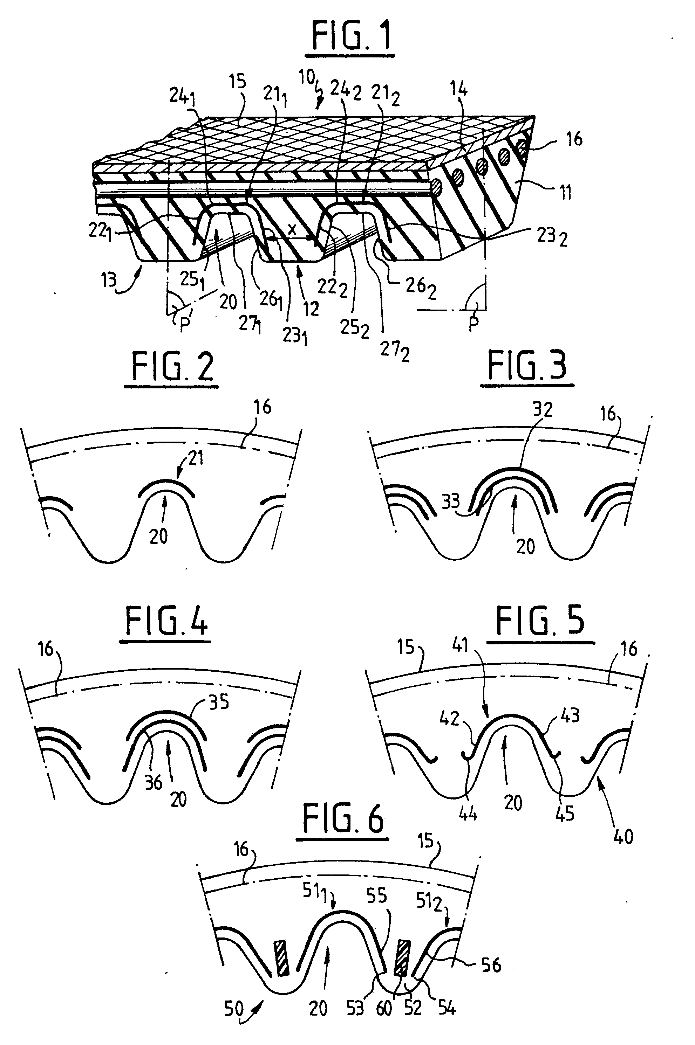

Comme montré sur la figure 1, une courroie 10 selon l'invention comprend une matrice 11 en matériau élastomère, comme du polychloroprène, du caoutchouc nitrile, des copolymères styrène-butadiène (SBR), etc... à section droite trapézoïdale et à flancs nus, découpée sur sa face interne 12 suivant des crans 13 et dont la face externe 14 peut être garnie d'une ou de plusieurs couche(s) de tissu caoutchouté 15, par exemple à base de coton enduit de polychloroprène, la face interne 12 pouvant aussi, le cas échéant, être garnie d'un tissu caoutchouté analogue au tissu 15.

Dans la matrice 11 est noyée une couche de câblés 16 servant de support de traction et qui peut être constituée à partir de fils métalliques, par exemple en acier ou à partir de fils en matière synthétique comme des fils de polyester, d'aramide, par exemple de Kevlar (une Marque Déposée de la Société Du Pont de Nemours) ou de verre.

Dans chacun des creux 20 du crantage, est disposé un renfort 21 constitué par un profilé à section droite "ouverte" ayant quelque peu la forme d'une gouttière, en métal, matière synthétique, ou en matériau composite, les renforts étant indépendants les uns des autres et disposés de la même manière dans chacun des creux $20_1$, $20_2$, ... etc du crantage de la courroie.

De façon plus précise, chaque renfort $21_1$, $21_2$, ... etc. est à section droite de forme incurvée avec des flancs $22_1$, $23_1$ ; $22_2$, $23_2$ ; ... etc reliés par une voûte $24_1$, $24_2$, ... etc. définissant un pli de section droite semblable à celle des creux 20 de sorte que lesdits renforts 21 peuvent être placés dans lesdits creux de manière que les flancs 22 et 23 soient dirigés sensiblement prallèlement aux faces latérales $25_1$, $26_1$ ; $25_2$, $26_2$, ... etc respectivement des crans de la courroie, en régnant sur une grande partie de la hauteur des crans, les voûtes $24_1$, $24_2$, ... etc des renforts étant quant à elles dirigées sensiblement parallèlement aux fonds $27_1$, $27_2$, ... etc desdits creux 20.

Dans une telle courroie selon l'invention, le centre de gravité situé dans le plan radial P de la courroie est proche de la fibre neutre en traction, située au niveau des câblés 16, avec pour avantage une augmentation importante de la stabilité des crans 13 dans le plan transversal P' , par rapport aux réalisations antérieures connues .

On accroît encore cette stabilité par un choix approprié de la distance séparant dans chaque cran 13 les bords libres en regard l'un de l'autre de deux renforts adjacents, par exemple le bord $30_1$ du flanc $23_1$ du renfort $21_1$, du bord $31_2$ du flanc $22_2$ du renfort $21_2$. Lorsque cette distance, mesurée suivant la direction longitudinale de la courroie et montrée en x sur la figure 1 est petite, la matrice d'élastomère est à plus petite déformabilité que lorsque cette distance est plus importante, de sorte que les caractéristiques de la courroie peuvent être établies en correspondance.

Dans la forme de réalisation montrée sur la figure 2, les renforts constitués dans chaque cran par un pli 21 sont de relativement courte longueur et ne règnent ainsi que sur une faible envergure des creux 20 de la courroie.

Dans la réalisation montrée sur la figure 3, chaque creux 20 est garni de renforts disposés suivant deux plis superposés 32 et 33, sensiblement de même longueur et même forme, les flancs des plis étant disposés parallèlement entre eux et sensiblement parallèlement au contour des creux de crantage de la courroie. On augmente ainsi la raideur de la courroie, ce qui contribue à la plus grande stabilité des crans dans le plan radial, sans porter atteinte à sa souplesse longitudinale.

Dans la réalisation selon la figure 4, proche de celle décrite immédiatement ci-dessus, les renforts disposés suivant deux plis 35 et 36 dans chaque creux 20 du crantage sont également placés parallèlement les uns aux autres et au contour des creux, mais le pli interne 36 est de plus grande longueur que le pli externe 35.

Dans la réalisation selon la figure 5, la courroie 40 est à renforts individuels 41 constitués chacun par un pli unique mais lesdits renforts présentent aux extrémités de chacun de leur flanc 42 et 43 des bords non pas simples, mais roulés ou partiellement rabattus comme montré en 44 et 45, lesdits bordés roulés ou rabats étant avantageusement dirigés vers l'extérieur de la courbe que forment les renforts en section droite.

Dans la réalisation selon la figure 6, la courroie 50 est munie, dans chacun des creux 20, d'un renfort 51 analogue à celui décrit en référence à la figure 1, mais l'invention prévoit complémentairement de loger dans chacun des crans 52, et entre les bords libres 53 et 54 des flancs en regard 55 et 56, respectivement, de deux renforts adjacents, un insert 60, par exemple sous forme d'une réglette ou plaquette en matière plastique dirigée sensiblement transversalement par rapport à la courroie. En diminuant l'épaisseur du matériau élastomère dans la zone séparant les bords 53 et 54 de deux renforts adjacents on contribue à la stabilité des crans de la courroie dans leur plan radial.

La fabrication d'une courroie selon l'invention est réalisée de façon analogue à celle d'une courroie crantée usuelle, de sorte qu'il n'en résulte pas de surcoût important susceptible de s'opposer à une exploitation industrielle.

**Revendications**

1. Courroie trapézoïdale crantée de transmission de puissance comprenant un corps formé d'une matrice en élastomère dans laquelle est noyée une couche de câbles métalliques ou de fils câblés en matière textile, naturelle ou synthétique, servant de support de traction et des renforts dirigés sensiblement transversalement par rapport à la courroie, ayant en section droite une forme "ouverte" quelque peu analogue à une gouttière, caractérisée en ce que lesdits renforts (21 ; 32, 33 ; 35, 36 ; 41 ; 51) sont des renforts individuels indépendants les uns des autres et logés dans les creux (20) du crantage de la courroie.

2. Courroie selon la revendication 1, caractérisée en ce que les renforts individuels sont disposés sous forme d'un pli unique (21) dans chaque creux (20) de la courroie avec leurs flancs (22, 23) dirigés sensiblement prallèlement au contour de chaque creux et leurs voûtes (24) également sensiblement parallèle aux fonds (27) de chacun desdits creux (20).

3. Courroie selon la revendication 1, caractérisée en ce que les renforts sont disposés suivant des plis (32, 33, 35, 36) parallèles entre eux et sensiblement parallèles au contour des creux (20) du crantage de la courroie.

4. Courroie selon la revendication 3, caractérisée en ce que les plis (32, 33) sont sensiblement de même longueur et envergure.

5. Courroie selon la revendication 3, caractérisée en ce que les plis (35, 36) sont de longueurs différentes.

6. Courroie selon l'une quelconque des revendications précédentes, caractérisée en ce que les bords libres (30, 31) des flancs (23, 22) de deux renforts adjacents sont sensiblement en regard l'un de l'autre.

7. Courroie selon l'une quelconque des revendications précédentes, caractérisée en ce que les flancs (22, 23) des renforts (21) règnent sur sensiblement la plus grande partie de la hauteur des crans.

8. Courroie selon la revendication 2, caractérisée en ce que les renforts ne règnent qu'au voisinage du fond (27) des creux (20) de la courroie et ainsi sur une faible envergure desdits creux.

9. Courroie selon la revendication 1, caractérisée en ce que les renforts présentent, aux bords libres de leurs flancs (42, 43), des bords roulés ou partiellement rabattus (44, 45).

10. Courroie selon l'une quelconque des revendications précédentes, caractérisée en ce qu'elle comprend en outre, dans chacun de ses crans (52), un insert (60) disposé entre les bords en regard (53, 54) des flancs (55, 56) de deux renforts adjacents ($51_1$, $51_2$).

11. Courroie selon la revendication 10, caractérisée en ce que ledit insert (60) est sous forme d'une réglette ou barrette en matière plastique ou en un matériau analogue.

12. Courroie selon l'une quelconque des revendications précédentes, caractérisée en ce que les renforts (21 ; 32, 33 ; 35, 36 ; 41 ; 51) sont et un matériau métallique comme de l'acier inoxydable, de l'aluminium, un alliage d'aluminium, un alliage cuivreux ou en matériau à base de résine synthétique armée ou non armée par des fibres naturelles et/ou synthétiques ou en un matériau composite, comme un lamifié comportant un tissu de fibres naturelles et/ou synthétiques, un élastomère et un feuillard métallique.

FIG. 1

FIG. 2

FIG. 3

FIG. 4

FIG. 5

FIG. 6

# RAPPORT DE RECHERCHE EUROPEENNE

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 222 637  (HUTCHINSON)<br>--- | | F 16 G    5/20 |
| A | PATENT ABSTRACTS OF JAPAN, vol. 10, no. 304 (M-526)[2360], 16 octobre 1986; & JP-A-61 116 149 (DAIDO KOGYO CO., LTD) 03-06-1986<br>--- | | |
| A,D | EP-A-0 084 702   (MITSUBOSHI BELTING)<br>--- | | |
| A,D | SOVIET INVENTIONS ILLUSTRATED, section mécanique, semaine 84/19, 20 juin 1984, Q64, résumé no. 84-119381/19, Derwent Publications Ltd, Londres, GB; & SU-A-1 033 794 (BELORUSSIAN POLY) 07-08-1983<br>----- | | |

**DOMAINES TECHNIQUES RECHERCHES (Int. Cl.4)**

F 16 G

Le présent rapport a été établi pour toutes les revendications

| Lieu de la recherche | Date d'achèvement de la recherche | Examinateur |
|---|---|---|
| LA HAYE | 15-03-1989 | BARON C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)